# EUROPÄISCHE PATENTSCHRIFT

(11) **EP 2 526 211 B1**
(45) Veröffentlichungstag und Bekanntmachung des Hinweises auf die Patenterteilung: **19.03.2014**
(21) Anmeldenummer: 11700327.7
(22) Anmeldetag: 05.01.2011
(51) Int. Cl.: C21C 5/28

(54) **VERFAHREN ZUR SCHAUMSCHLACKENERZEUGUNG EINER ROSTFREISCHMELZE IN EINEM KONVERTER**
METHOD FOR FOAMED SLAG GENERATION OF A NON-CORROSIVE MELT IN A CONVERTER
PROCÉDÉ DE PRODUCTION DE LAITIER MOUSSEUX D'UNE CHARGE FONDUE INOXYDABLE DANS UN CONVERTISSEUR

(30) Priorität: 19.01.2010 DE 102010004983
(43) Veröffentlichungstag der Anmeldung: 28.11.2012
(73) Patentinhaber: SMS Siemag AG, 40237 Düsseldorf (DE)
(72) Erfinder: REICHEL, Johann, 40489 Düsseldorf (DE); ROSE, Lutz, 47259 Duisburg (DE)
(74) Vertreter: Klüppel, Walter
(86) Internationale Anmeldenummer: PCT/EP2011/050079
(87) Internationale Veröffentlichungsnummer: WO 2011/089027

(56) Entgegenhaltungen:
- EP-A1- 0 743 368
- DE-A1-102008 032 975
- JP-A- 1 116 018

## Beschreibung

Die Erfindung betrifft ein Verfahren zur Schaumschlackenerzeugung einer Rostfreischmelze in einem AOD- (Argon Oxygen Decarburization) oder MRP- (Metallurgical Refining Process) Konverter bzw. CONARC SSt für Rostfreistahl durch eine Zugabe eines Schäummaterials.

Während der Raffination in einem Konverter zur Herstellung von Rostfreistahl bildet sich eine Schlacke, die einen hohen Anteil von Metalloxiden, vor allem des von Chromoxid beinhaltet. Die Konzentration des Chromoxids während der Raffinationsphase erreicht oft Werte höher als 20 %, was die Viskosität der Schlacke stark erhöht. Die Schlacke ist meistens kurz vor der Reduktion sehr hart.

Die Prozessmetallurgie derartiger Schlacken bildet folgende hintereinander ablaufende Teilreaktionen:

{O₂} = 2[O] thermische Dissoziation des Sauerstoffs (1)

2[Cr] + 3[O] = (Cr₂O₃) Chromoxidation in der Schmelze (2)

(Cr₂O₃) + 3[C] = 2[Cr] + 3{CO} Chromoxidreduktion auf der Phasengrenze Schlacke/Metall (3)

Die Reaktion (3) ist für die Herstellung von Rostfreistahl von grundlegender Bedeutung, da Chromoxid der wichtigste Bestandteil bei der Schaumschlackenbildung ist. Allerdings findet diese Reaktion in dem konventionellen Prozess in sehr geringem Umfang statt. Der Grund dafür liegt in der hohen Viskosität der Schlacke. Alle bis jetzt gängigen Konverterverfahren reduzieren die Schlacke erst in dem nachfolgenden Schritt, in der sogenannten Reduktion, wobei das Verfahren dafür normalerweise mit Silizium in Form von Ferrosilizium durchgeführt wird.

Ist allerdings die Schlackenviskosität zum Schäumen geeignet, wird der Reduktionsvorgang (GI.3) durch das gebildete gasförmige CO vom Raffinationsprozess selbst als auch durch die Eisenoxydreduktion des Schäummaterials ermöglicht. Diese wird in die Schmelze in Form von Pellet oder Brikett zu einem bestimmten Zeitpunkt zugegeben. Die Hauptbestandteile des Materials sind Eisenoxidträgers wie z.B. Zunder, dann Kohlenstoff und ein Balastmaterial, dass eine gezielte Platzierung des Briketts in der Schmelze definiert.

Der Reduktionsprozess in einem solchen Brikett verläuft dann nach dem folgenden Prinzip:

(Fe₂O₃) + 3[C] = 2[Fe] + 3{CO} Chromoxidation in der Schmelze (4)

Entscheidend für die Schaumschlackenbildung sind damit die Bestandteile des zugesetzten Schäummaterials sowie die Schlackenviskosität, die wiederum von der Zusammensetzung und der Temperatur der schmelzflüssigen Schlacke abhängt. Vor allem durch die Viskosität wird ein Zustandsbereich der schmelzflüssigen Schlacke definiert, in dem eine Schaumbildung möglich ist. Wichtig ist daher die Steuerung der für die Viskosität zuständigen Schlackenbasizität, wodurch die entstehenden Gasblasen zu einem zeitweiligen Verbleib in der Schlackenschicht gezwungen werden. Der zur Steuerung der Schlackenbasizität zugesetzte Kalkstein stellt dabei eine weitere Gasquelle dar, da die thermische Dissoziation dieses Materials nach folgender Gleichung CO frei setzt:

(CaCO₃) = (CaO) + {CO} (5)

Bei dem Phänomen der Blasenbildung handelt es sich um einen Prozess, der die mechanische Kraft der reagierenden Gasblasen zur Herstellung eines neuen Oberflächenbereiches in der Schlacke nutzt. Die Auftriebskräfte an den Gasblasen spalten die Schlackenoberfläche vorübergehend und sättigen die komplette Schlackenschicht zur Herstellung des Schaums. Bei einem nachhaltigen Gasstrom aus den reagierenden Stoffen wächst die Anzahl der sich ansammelnden Blasen mit wachsendem Schaum. In der Folge steigt die Höhe der Schaumschicht mit wachsender Gasmenge, sie ist direkt proportional zur Menge des Schäummaterials.

Wichtig bei einem derartigen Mechanismus ist die optimale Platzierung der Reaktionsstoffe, um so eine maximale Schäumwirkung zu erhalten. Die optimale Platzierung erfolgt im Grenzbereich zwischen der Schlackenschicht und dem Flüssigmetall.

Die Druckschrift JP 1 116018 A beschreibt ein Verfahren zur Effizienzsteigerung des Blasvorgangs bei der Stahlerzeugung in einem Konverter durch Zugabe eines Gemischs, bei dem die Schlackenbildung bzw. die Schaumbildung unterbunden wird.

In der DE 195 18 343 A1 ist ein Verfahren zur Erhöhung der Effektivität bei der Schmelzereduktion von oxidischen Metallträgern und der Verbesserung des Wärmewirkungsgrades der eingesetzten Brennstoffe bei dem Schmelzproduktionsprozess beschrieben.

Die DE 10 2008 032975 A1 beschreibt ein Verfahren zur Erzeugung einer Schaumschlacke auf Rostfreistahlschmelzen in einem Elektrolichtbogenofen.

Bei der Herstellung von Rostfreistahl wird das Schlackeaufschäumen bislang nicht betrieben. Heutzutage werden lediglich Stäube als gepresste Pellets bzw. Briketts zugegeben mit der Funktion Kühleffekte zu erzielen. Da das Reduktionselement, nämlich Kohlenstoff und das Balastmaterial in den Briketts fehlt, bleiben diese nur im Schlackenbereich unreduziert effektiv.

In der DE 10 2007 006 529 A1 werden bei der Herstellung einer Schaumschlacke auf einer hochchromhaltigen Stahlschmelze zusätzlich die in der Schlacke befindlichen Metalloxide, vorwiegend Chromoxid, durch die nahe der Phasengrenze Schmelze/Schlacke schwimmenden Briketts und/oder Pellets reduziert, wobei die entstehenden Reaktionsgase das Schlackeaufschäumen unterstützen. Hierzu bestehen die in den Elektrolichtbogenofen chargierten Briketts bzw. Pellets aus einem definierten Gemisch aus einem Eisenträger als Ballastmaterial, aus Kohlenstoff bzw. Kohlenstoff als Reduktionsmittel sowie einem Bindemittel.

Während des Frischens im Konverter bildet sich eine Schlacke, die einen hohen Anteil an Chromoxid beinhaltet. Die Chromoxid-Konzentration erreicht dabei oft Werte wie zuvor erwähnt oberhalb von 20 %, weshalb derartige Schlacken aufgrund ihrer Zusammensetzung nicht in erwünschtem Maße verflüssigt und aufgeschäumt werden können. Es ist Aufgabe der Erfindung, ein Verfahren zu entwickeln, mit dem die bekannten erfolgreichen Verfahren zum Schlackeaufschäumen im Elektroofen auch in einem Konverter angewendet werden können.

Die gestellte Aufgabe wird mit den kennzeichnenden Merkmalen des Anspruchs 1 dadurch gelöst, dass ein zuvor definiertes Gemisch aus einem Metalloxid, Eisenträger, Kohlenstoff und Bindematerial in Form von Pellets bzw. Briketts in den Konverter eingegeben wird und unter der Schlackenschicht auf Grund der hohen Umgebungstemperatur chemisch reduzierend reagiert, wobei insbesondere durch den Reduktionsvorgang des Metalloxids mit dem Kohlenstoff gebildetes gasförmiges Kohlenmonoxid mit seinen Gasblasen das Schlackenaufschäumen hervorruft und wobei die spezifische Dichte des Materials und die Auflösungsdauer des Reduktionsvorgangs so gewählt sind, dass eine optimale Blasenbildung in Bezug auf die Größe und Dauer erreicht wird.

Die Schaumschlacke entwickelt sich quasi exponentiell entsprechend dem Aufbau des aus einem Metalloxid, Eisenträger, Kohlenstoff und Bindematerial in Form von Pellets bzw. Briketts bestehenden definierten Gemisches. Eingeführt in die Zone zwischen der Schlackenschicht und der Metallschmelze unterliegt das Gemisch auf Grund der vorherrschenden hohen Umgebungstemperatur einem Lösungsprozess mit paralleler Reduktion des Eisenoxids. Das Pellet bzw. Brikett wird beim Eintritt in diese Zone sofort wegen seiner kälteren Temperatur mit einer Schale aus erstarrtem Metall umhüllt. Da die mittlere Schmelztemperatur des Pellets bzw. Briketts niedriger ist als die des Metalls, findet innerhalb der Schale ein Schmelzprozess des Gemisches statt. Abhängig von der Temperaturdifferenz wird der Reduktionsvorgang innerhalb der Schale entweder früher als das Schmelzen der Schale oder später beendet. In dem ersten Fall kann der Vorgang zum Platzen des Granulats und explosiver Befreiung der CO-Gasblase führen, was eine stärkere Metall / Schlacke-Durchmischung hervorruft. In dem anderen Fall wird sich die CO-Gasblase frei in der Zone zwischen der Schlacke und der Metallschmelze entwickeln.

Erfindungsgemäß wird die Zugabe des Schäummaterials durch eine spezifische Steuerung mit Werten zwischen 2 - 30 kg Pellets bzw. Briketts/t flüssig Metall/min. so durchgeführt, dass eine definierte Schaumschlackenhöhe erhalten wird und über eine zuvor definierte Zeit auch erhalten bleibt. Die Verteilung dieser Zugabe an Schäummaterial erfolgt schichtweise und flächendeckend mit einer definierten Flächendichte und beträgt für einen optimalen Schäumeffekt zwischen 1 - 5 kg/m²/min.

Wichtig für ein gezieltes Schlackenaufschäumen ist die Einhaltung einer definierten Schlackenviskosität, weshalb eine entsprechende Schlackenführung erforderlich ist.

Beim Betreiben von Konvertern wird eine Charge, d. h. vor allem das Vormetall mit dem Sauerstoff gefrischt. Hierbei erfüllt die Schlacke ihre Primärfunktion durch das Abfangen von unerwünschten Bestandteilen aus der Schmelze. Aufgrund der schwachen Wärmeleitfähigkeit der aufgeschäumten Schlacke werden die Wärmeverluste stark reduziert und damit das Energieeinbringen in die metallische Schmelze verbessert.

Die Schaumschlacke bedeutet auch eine starke Schalldämpfung. Die mit Schaumschlacke umhüllte Top-Blaslanze emittiert wenig Geräusche in die Umgebung und verbessert damit die Umweltbedingungen im Bereich der Konverter.

Weitere Vorteile einer gut schäumenden Schlacke im Konverter sind:
- verbesserte Energiebilanz der Schmelze aufgrund der Isolationsschicht der Schaumschlacke,
- Beschleunigung der Entkohlung durch gesättigten Sauerstoff in der Schlacke und dessen Reaktion mit dispersiven Metalltropfen,
- Minimierung von Spritzern und Verbärung des Innenraumes des Konverters,
- Erhöhung der Prozesseffizienz durch Metallgewinnung aus Restmaterialien wie beispielsweise E-Ofen- und Konverter Stäube, Schlämme wie auch andere wieder verwertbare Reststoffe des Stahlwerks, die in den Pellets bzw. Briketts als Metalloxid bzw. Eisenträger eingemischt werden können;
- Kühleffekt der Brikettzugaben.

In einer schematischen Zeichnungsfigur ist nachfolgend ein erfindungsgemäßes Schlackenaufschäumen dargestellt. Oberhalb einer in einem Konverter (der Konverter ist nicht dargestellt) vorhandenen Metallschmelze 1 befindet sich, auf der Metallschmelze 1 schwimmend, eine Schlackenschicht 2 mit eingelagerten Pellets 4. Diese Pellets 4 wurden zuvor in den Konverter eingefüllt, wo sie sich auf Grund ihres vorab eingestellten Raumgewichts und wegen ihrer Ausbildung mit einer Schale 6 aus erstarrtem Metall zunächst in die Zone 3 zwischen der Schlackenschicht 2 und der Metallschmelze 1 anordneten. Nach Abschmelzen dieser Schale 6 und entsprechend leichter haben einige Pellets 4 die Zone 3 verlassen und befinden sich innerhalb der Schlackenschicht 2. Die durch die Reduktion von in den Pellets 4 vorhandenen Eisenoxydträgern und von vorhandenem Kalkstein (CaCO₃) entstandenen CO/CO₂-Gasblasen 7 haben zur Bildung einer Schaumschlackenschicht 8 geführt, in der die CO/CO₂-Gasblasen 7 vergrößert dargestellt sind.

Zur Veranschaulichung ist ein Pellet 4 aus einem Gemisch 5 mit beispielhaften Inhaltstoffen (CO, CO₂, Fe, Cr, CaO) und mit einer in der Zone 3 gebildeten Schale 6 aus erstarrtem Metall gleichfalls vergrößert dargestellt.

### Bezugszeichenliste

- 1: Metallschmelze
- 2: Schlackenschicht
- 3: Zone zwischen der Schlackenschicht und der Metallschmelze
- 4: Pellet
- 5: definiertes Gemisch des Pellets
- 6: gebildete Schale aus erstarrtem Metall
- 7: Gasblase
- 8: Schaumschlackenschicht

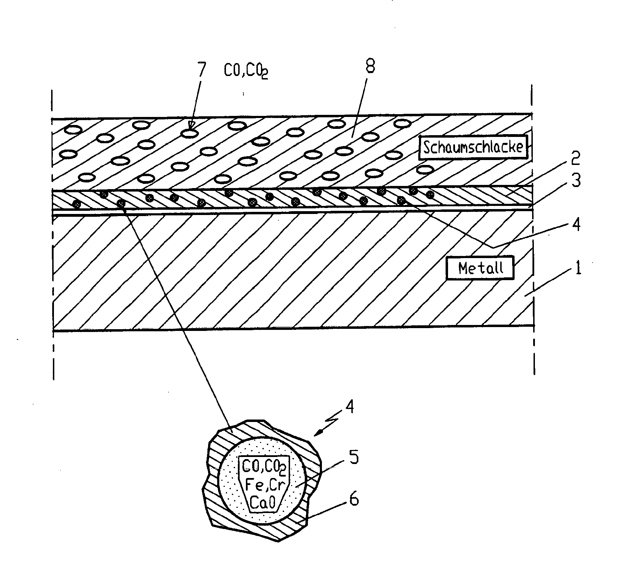

## Patentansprüche

1. Verfahren zur Schaumschlackenerzeugung einer Rostfreischmelze in einem AOD- (Argon Oxygen Decarburization) oder MRP- (Metallurgical Refining Process) Konverter oder CONARC SSt für Rostfreistahl durch Zugabe eines Schäummaterials, wobei ein zuvor definiertes Gemisch (5) aus einem Metalloxid, Eisenträger, Kohlenstoff und Bindematerial in Form von Pellets bzw. Briketts (4) in den Konverter eingegeben wird und unter der Schlackenschicht (2) auf Grund der hohen Umgebungstemperatur chemisch reduzierend reagiert,
**dadurch gekennzeichnet, dass**
durch den Reduktionsvorgang des Metalloxids mit dem Kohlenstoff innerhalb der Pellets bzw. Briketts (4) gebildetes gasförmiges Kohlenmonoxid mit seinen Gasblasen (7) das Schlackenaufschäumen hervorgerufen wird,
wobei die Zugabe des Schäummaterials durch eine spezifische Steuerung mit Werten zwischen 2 - 30 kg Pellets bzw. Briketts (4) pro Tonne Metallschmelze (1) pro Minute so durchgeführt wird, dass eine definierte Schaumschlackenhöhe erhalten wird und über eine zuvor definierte Zeit auch erhalten bleibt, und
dass die Verteilung des zugegebenen Schäummaterials schichtweise und flächendeckend mit einer definierten Flächendichte, die für einen optimalen Schäumeffekt im Bereich von 1 - 5 kg/m²/min liegt, durchgeführt wird.

2. Verfahren nach Anspruch 1, **dadurch gekennzeichnet, dass** zur Erhaltung einer für das gezielte Schlackenaufschäumen erforderlichen definierten Schlackenviskosität eine entsprechende Schlackenführung durchgeführt wird.

3. Verfahren nach Anspruch 1 oder 2, **dadurch gekennzeichnet, dass** im definierten Gemisch (5) der Pellets bzw. Briketts als Metalloxid bzw. Eisenträger vorhandene Restmaterialien wie beispielsweise E-Ofen- und Konverter Stäube, Schlämme wie auch andere wieder verwertbare Reststoffe des Stahlwerks verwendet werden.

## Claims

1. Method for generation of foamed slag in a stainless-steel melt in an AOD (Argon Oxygen Decarburisation) or MRP (Metallurgical Refining Process) converter or a CONARC SSt for stainless steel by addition of a foam-inducing material, wherein a predefined mixture (5) of a metal oxide, iron carrier, carbon and binder in the form of pellets or briquettes (4) is introduced into the converter and subjected to chemically reducing reaction under the slag layer (2) by way of the high ambient temperature,
**characterised in that**
gaseous carbon monoxide formed by the reduction process of the metal oxide with the carbon within the pellets or briquettes (4) produces, by its gas bubbles (7), foaming of the slag,
wherein the addition of the foam-inducing material is so carried out by specific control at values between 2 and 30 kg of pellets or briquettes (4) per tonne of metal melt (1) per minute that a defined height of foamed slag is obtained and is also maintained for a predefined time, and
that the distribution of the added foam-inducing material with respect to layering and area coverage is carried out with a defined area density which, for optimal foaming effect, lies in the range of 1 to 5 kg/m²/min.

2. Method according to claim 1, **characterised in that** an appropriate slag control is performed in order to obtain a defined slag viscosity required for the desired foaming of the slag.

3. Method according to claim 1 or 2, **characterised in that** residual materials, such as, for example, electric furnace and converter dusts, tailings and other reusable steel mill residues, present as a metal oxide or iron carrier are used in the defined mixture (5) of the pellets or briquettes.

## Revendications

1. Procédé pour l'obtention d'un laitier mousseux d'une fonte inoxydable dans un convertisseur AOD (Argon Oxygen Decarburization) ou MRP (Metallurgical Refining Process) ou CORNAC SSt pour l'acide inoxydable par addition d'une matière de transformation en mousse, dans lequel on introduit dans le convertisseur un mélange (5) défini au préalable constitué d'un oxyde métallique, d'un porteur de fer, de carbone et d'une matière faisant office de liant, sous la forme de granulés respectivement de briquettes (4) et qui réagit en dessous de la couche de laitier (2) à la manière d'une réduction chimique sur base de la température ambiante élevée, **caractérisé en ce que** du monoxyde de carbone gazeux qui se forme à l'intérieur des granulés respectivement des briquettes (4) via le processus de réduction de l'oxyde métallique avec le carbone, génère, avec ses bulles de gaz (7), la transformation en mousse du laitier, l'addition de la matière de transformation en mousse étant mise en oeuvre via un réglage spécifique avec des valeurs entre 2 et 30 kg de granulés respectivement de briquettes (4) par tonne de fonte métallique (1) par minute, de telle sorte que l'on obtient une hauteur définie de laitier mousseux et que l'on maintient également pendant un laps de temps défini au préalable, et **en ce que** la répartition de la matière ajoutée de transformation en mousse est mise en oeuvre de façon à obtenir une couche et à recouvrir la surface avec une densité de surface définie qui, pour un effet moussant optimal, se situe dans la plage de 1 à 5 kg/m²/minute.

2. Procédé selon la revendication 1, **caractérisé en ce que**, pour obtenir une viscosité de laitier définie requise pour la transformation ciblée en mousse du laitier, on met en oeuvre un guidage du laitier correspondant.

3. Procédé selon la revendication 1 ou 2, **caractérisé en ce que**, dans le mélange défini (5) des granulés respectivement des briquettes, on utilise, à titre d'oxyde métallique respectivement de porteurs de fer, des matières résiduelles présentes comme par exemple des poussières du four électrique et du convertisseur, des boues, ainsi que d'autres matières résiduelles réutilisables de l'aciérie.
